Europäisches Patentamt

European Patent Office

Office européen des brevets

(19)

(11) Veröffentlichungsnummer: **0 538 180 B1**

(12)

# EUROPÄISCHE PATENTSCHRIFT

(45) Veröffentlichungstag der Patentschrift: **31.05.95**

(51) Int. Cl.6: **A63J 1/02**, G05B 19/40, G05B 19/42

(21) Anmeldenummer: **92630088.0**

(22) Anmeldetag: **17.09.92**

(54) **Verfahren zum Bewegen, mit mindestens drei Freiheitsgraden, insbesondere im Theaterbereich, von dreidimensionalen Gebilden.**

(30) Priorität: **27.09.91 LU 88009**

(43) Veröffentlichungstag der Anmeldung:
**21.04.93 Patentblatt 93/16**

(45) Bekanntmachung des Hinweises auf die
Patenterteilung:
**31.05.95 Patentblatt 95/22**

(84) Benannte Vertragsstaaten:
**AT CH DE ES FR GB IT LI PT SE**

(56) Entgegenhaltungen:
**EP-A- 0 423 360**
**DE-A- 100 545**
**DE-A- 2 836 423**
**DE-C- 3 121 092**

(73) Patentinhaber: **Schiltz, Jean-Marie**
**37, rue Marie-Adelaide**
**L-4837 Rodange (LU)**

(72) Erfinder: **Schiltz, Jean-Marie**
**37, rue Marie-Adelaide**
**L-4837 Rodange (LU)**

(74) Vertreter: **Waxweiler, Jean et al**
**OFFICE DENNEMEYER & ASSOCIATES Sàrl,**
**P.O. Box 1502**
**L-1015 Luxembourg (LU)**

## Beschreibung

Die Erfindung betrifft ein Verfahren zum Bewegen, mit mindestens drei Freiheitsgraden, insbesondere im Theaterbereich auf oder unter einer Bühne, eines komplexen dreidimensionalen Gebildes, welches durch mehrere unabhängig anzusteuernde Hubmaschinen oder der gleichen getragen wird.

Das Verfahren kann überall dort eingesetzt werden, wo Maschinen über und/oder unter einer virtuellen Fläche verteilt wirken, sei es durch Seilabgänge, sei es durch Hubpodien, insbesonders die Ober-, bzw Untermaschinerie auf Bühnen in Theatern, Opern, Schauspielhäusern, Konzertsälen, Mehrzweckhallen oder dergleichen. Hierbei müssen des, öfteren komplexe Gebilde bewegt werden. Unter komplexem Gebilde versteht man eine Kulisse oder Gegenstand, der, bedingt durch seine Form, seine Funktion oder sein Gewicht, an mehreren Punkten aufgehängt oder gestützt werden muß.

Aus DE-A-2836423 ist ein Verfahren und eine Roboter-Einrichtung für mehrdimensionale Bewegungsteuerung und Programmierung bekannt. Die Roboter-Einrichtung umfaßt einen Elementarbewegungsantrieb, welcher den Informationsinhalt eines Informationsspeichers möglichst ohne Überschwingen, aber ohne Verfälschung des Informationsinhaltes in Bewegung umsetzt.

Zur Zeit besteht die Möglichkeit, komplexe Gebilde, welche in mehreren Punktzügen hängen, entweder zeitsynchron oder wegsynchron zu verfahren. Bei der wegsynchronen Fahrt beschreiben alle betroffenen Maschinen den gleichen Verfahrweg (eventuell mit unterschiedlichen Start- und Zielpositionen). Bei der zeitsynchronen Fahrt legen alle betroffenen Maschinen unterschiedliche Wege in der gleichen Zeit zurück. Das gemeinsame Merkmal dieser bisher möglichen Fahrten ist, daß jeder Position jeder Maschine entsprechende Positionen der übrigen Maschinen zugeordnet sind; das heißt es steht ein einziger Bewegungsfreiheitsgrad, d.h. üblicherweise Heben oder Senken, zur Verfügung. Die Bewegung selbst wird üblicherweise durch einen Steuerknüppel ausgelöst, dessen Auslenkung gegenüber der Nullstellung ein Maß für die Geschwindigkeit ist. Kipp- und Rollbewegung sind nur insofern möglich, als daß deren Ziel- und Endpositionen vorher ermittelt und eingegeben werden müssen. Es war bisher nicht möglich, eine solche Bewegungung freihändig auszuführen, zu improvisieren.

Die Aufgabe der Erfindung ist es ein Verfahren bereitzustellen, bei welchem es möglich ist, ein Gebilde, welches an mehreren unabhängigen Maschinen, welche über und/oder unter eine virtuellen Fläche verteilt sind, befestigt ist, im Raum mit mindestens drei Freiheitsgraden (bzw. auf der Fläche mit zwei Freiheitsgraden) zu bewegen, wodurch das Einrichten des Gebildes vereinfacht und wiederholbar wird, ebenso die Bewegung des Gebildes selbst.

Diese Aufgabe wird gemäß dem Verfahren nach der Erfindung dadurch gelöst, daß man in dem Raum drei virtuelle parallele Bezugachsen installiert, auf welchen in Abhängigkeit von je einem Positioniersignal je ein Angriffspunkt auf- bzw. abbewegt wird, daß man durch diese Angriffspunkte eine virtuelle Fläche zieht, daß man über bzw. unter dieser Fläche mehrere unabhängige Hubmaschinen oder der gleichen installiert, daß man in Abhängigkeit von ihrer Position gegenüber jeder Bezugsachse für jede Hubmaschine eine Wichtung bestimmt, welche ein Maß ist für den Betrag, mit welchem der Lauf der jeweiligen Maschine von Bewegung der Angriffspunkte auf den Bezugsachsen beeinflußt wird, daß man die Bewegungsrichtung und -Geschwindigkeit der Angriffspunkte auf den Bezugsachsen als Positioniersignale vorgibt, daß man über die Wichtung für jede Maschine Teilsteuersignale entsprechend der Anteile ihrer Beeinflußung durch die Bewegung der Angriffspunkte erzeugt, daß man die Teilsteuersignale für jede Maschine summiert und den einzelnen zugeordneten Maschinen als Gesamtsteuersignal zuführt.

Gemäß der Erfindung wird für die betroffenen Maschinen nicht nur ein Teilsteuersignal verwendet, sondern je nachdem, ob eine Bewegung mit zwei oder drei Freiheitsgraden erzielt werden soll, deren zwei oder drei.

Mit dieser Erfindung ist es möglich, komplexe Gebilde einfach einzurichten, ohne jedliches explizites Ausrechnen irgendeiner Start- oder Zielpositionen der werwendeten Maschinen. Die eingestellten Positionen können zum Beispiel zur weiteren Verwendung als Start- oder Zielpositionen abgespeichert werden. Das Verfahren erlaubt es aber auch, die Maschinen innerhalb vorgegebenen Grenzen zu bewegen. Als quelle für die Positioniersignale können entweder mehrere unabhängige Fahrhebel benutzt werden, so daß jeder einen der drei Angriffspunkte, welche die Eckpunkte der virtuellen Fläche (bzw. zwei Eckpunkte der virtuellen Linie bei der Bewegung mit 2 Freiheitsgraden) auf den Bezugsachse steuert, oder aber ein spezieller Fahrhebel, genannt SpaceMaster, mit welchem man die Möglichkeit hat, alle drei geforderten Positioniersignale mit einer Hand zu beeinflußen. Die gemischte Verwendung eines unabhängigen Fahrhebels und des speziallen Fahrhebels, genannt SpaceMaster, ist auch möglich.

Als weitere Möglichkeit können die Positioniersignale auch von einer anderen quelle, wie zum Beispiel einem Datenträger entnommen werden, und so entweder einem vorgegebenen Programm oder einer anderen extern angeschlossenen Apparatur folgen.

Positioniersignale können abgespeichert und später wieder abgefahren werden. Dieses Verfahren ist als Teach-In bekannt.

Die Erfindung wird nun bei ihrer Verwendung beim Einrichten, Bewegen und/oder Verfahren von Kulissen auf einer Theaterbühne unter Bezugnahme auf die beigefügten Zeichnungen beschrieben. Darin sind:

Fig. 1 eine schematische Darstellung einer Anwendung der Erfindung;

Fig 2a-c Diagramme zur Begriffserläuterung; und

Fig 3 eine schematische Darstellung einer bevorzugten Ausführungsform der Vorrichtung zur Durchführung des Verfahrens nach der Erfindung.

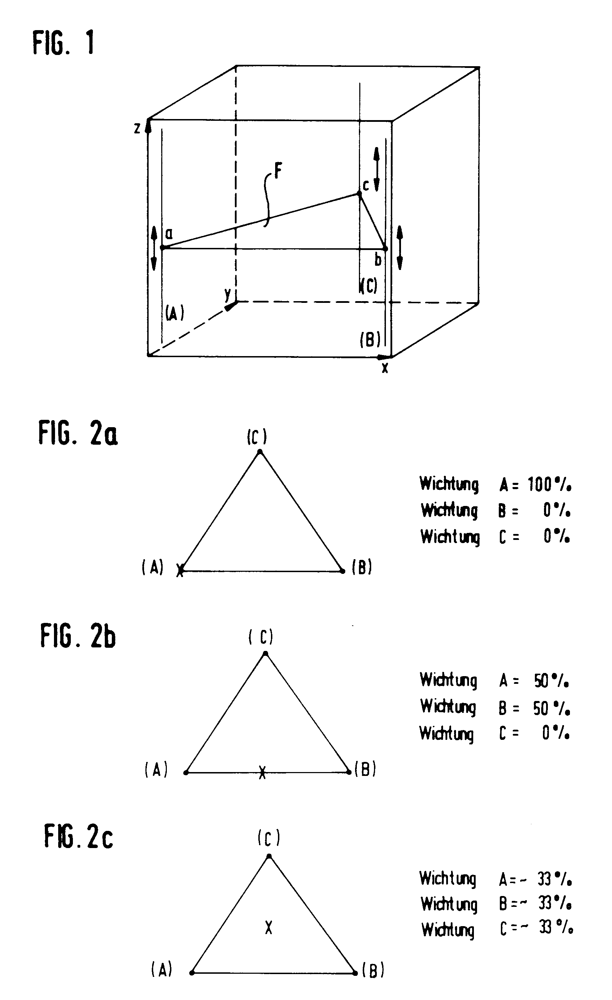

In der Fig 1 ist ein Bühnenraum schematisch mit den Raumachsen x, y, z dargestellt. Gemäß der Erfindung werden drei virtuelle Bezungsachsen A, B, C im Bühnenraum installiert. Eine virtuelle Fläche F, welche den zu bewegenden Gegenstand darstellt, wird von den Bezugachsen A, B, C in den Angriffspunkten a, b, c geschnitten. Die den zu bewegenden Gegenstand (nicht dargestellt) tragenden Mittel (Seilabgänge oder Hubpodien) (nicht dargestellt) sind über, bzw. unter der gedachten Fläche F angeordnet. Jedem Seilabgang oder Hubpodium ist ein Antrieb oder Maschine zugeordnet.

Soll der Gegenstand nun eingerichtet oder bewegt werden, so wird die dazu notwendige Bewegung mittels den Angriffspunkten a, b, c entsprechenden Positioniersignalen vorgegeben. Jedes Positioniersignal verschiebt einen ihm zugeordneten Angriffspunkt a, b oder c auf der entsprechenden Bezugsachse A, B oder C auf oder ab. Die Bezugsachsen A, B, C sind, wie bereits gesagt, im Raum aufgestellt und sind normalerweise parallel zueinander. Eine andere Anordnung ist möglich, erschwert aber das Rechenverfahren.

Die Positioniersignale dienen zum Verschieben der Angriffspunkte a, b, c auf den jeweiligen Bezugsachsen A, B, C. Da die Fläche durch diese Angriffspunkte gelegt ist, verschiebt sie sich somit mit den Angriffspunkten. Da man die Angriffspunkte a, b, c mit Hilfe der Positioniersignale auf den Bezugsachsen A, B, C unabhängig voneinander bewegen kann, hat man drei Freiheitsgrade, mit welchen diese Fläche im Raum verfahren werden kann.

Die über und/oder unterhalb der virtuellen Fläche F aufgebauten mehreren Maschinen oder Antriebe (nicht dargestellt) haben naturgemäß zu jeder Bezugsachse eine andere Position. Bedingt durch die unterschiedliche Abstände zwischen den Maschinen und einer gegebenen Bezugsachse, hat die Bezugsachse unterschiedlich starken Einfluß auf die von jeder Maschine über ihrem Seilabgang oder Hubpodium bewirkte Bewegung der Fläche (des Gegenstandes) am Ort des Angriffs des zugeordneten Seilabgangs oder Hubpodiums am Gegenstand (Fläche).

Ist eine Maschine ganz nahe an, oder gar auf einer Bezugsachse selbst angeordnet (Fig. 2a, Punkt A), so beträgt der Einfluß dieser Bezugsachse auf die Maschine 100 %. Liegt die Maschine aber über/unter der Verbindungslinie der Schnittpunkte b, c der beiden anderen Bezugsachsen B, C mit der Fläche F (Fig. 2B, Linie AB), so ergibt sich hier einen Einfluß von Null der Bezugsachse A. Dieser Einfluß der Bezugsachsen auf die Maschinen oder Antriebe soll im folgenden mit Wichtung bezeichnet werden. Es liegt auf der Hand, das jede Maschine soviele unterschiedliche Wichtungen erhält, wie Bezugsachsen vorhanden sind. Die Gesamtwirkung der einzelnen Maschinen erhält man durch Addieren ihrer Einzelwirkungen.Der Begriff Wichtung wird an Hand der Fig. 2 weiter erläutert werden.

Die Maschinen befinden sich in einem bestimmten Abstand zu den drei Achsen. Jede Maschine wird zu einem bestimmten Teil von jeder Achse beeinflußt.

Zu Fig. 2a : Die Maschine x auf der Bezugsachse A wird nur von der Bezugsachse A beeinflußt verschiebt man die Angriffspunkte auf den Bezugsachsen B und/oder C, so hat dies keinen Einfluß auf die Maschine x auf der Bezugsachse A.

Zu Fig 2b : Die Maschine x auf der Verbindungslinie zwischen den Schnittpunkten a, b (Angriffspunkte) der Bezugsachsen A und B wird von Bezugsachsen A und B beeinflußt. Durch Verschieben der Angriffspunkte auf den Bezugsachsen A und/oder B wird die Maschine beeinflußt. Die Wichtung beträgt jeweils aber nur 50 %, wenn die Maschine sich in der Mitte zwischen den Bezugsachsen A und B befindet. Verschiebt man die Maschine auf der Verbingslinie, nimmt der Einfluß der Bezugsachse A oder B zu, bzw ab, wenn die Maschine sich der Bezugsachse A oder B nähert, bzw sich von ihr entfernt. Ein Verschieben des Angriffspunktes auf der Bezusachse C hat keinen Einfluß auf diese Maschine.

Zu Fig. 2C: Die Maschine x wird von allen drei Achsen A, B, C beeinflußt. Durch Verschieben des Angriffspunktes auf der Bezusachse A und/oder B und/oder C wird jedesmal die Maschine beeinflußt. Die Wichtung liegt diesmal bei ungefähr 33 % für jede Bezugsachse, da in diesem Fall die Maschine im geometrischen Mittelpunkt liegt.

Die Ermittlung des Gesamtpositioniersignals für einen Antrieb geschieht nach folgender Formel:

$$Smx = Wax \cdot Sa + Wbx \cdot Sb + Wcx \cdot Sc \qquad (0)$$

Hierbei sind:

Wax, Wbx, Wcx die Wichtungen der Maschine x pro Bezusachse A, B, C;

Sa, Sb, Sc die Positioniersignale der Angriffspunkte a, b, c der Bezugsachsen A, B, C; und

Smx das Gesamtpositioniersignal der Maschine x.

Dadurch, daß man die Bezugsachsen A, B, C an die Eckpunkte eines rechtwinkligen Dreiecks setzt, kann man das Ausrechnen der Wichtung etwas vereinfachen.

Die Positioniersignale für die Angriffspunkte a, b, c auf den Bezugsachsen A, B, C können auf verschiedenen Wegen hergeleitet werden. Zum einen können konventionelle Fahrhebel benutzt werden, welche sich in einer Dimension (rauf oder runter) auslenken lassen. Kommen nur solche Fahrhebel zum Einsatz, so werden davon mindestens drei Stück benötigt.

Man kann aber auch spezielle Fahrhebel zum Einsatz bringen, welche mindestens drei verschiedene Bewegungsfreiheitsgrade besitzen. Diese könnten zum Beispiel sein: X- und Y-Rotation und Z-Translation. Durch Umrechnung dieser Signale erhält man die Positioniersignale für die Angriffspunkte auf den Bezugsachsen. Ein solcher Fahrhebel ist das Fabrikat SpaceMaster der Firma Basys in Erlangen.

Die Umrechnung der X- und Y-Rotations- und des Z-Translationssignale geschieht nach folgendem Verfahren:

$$Sa' = a \cdot Tz + b \cdot Rx + c \cdot Ry \qquad (1)$$

$$Sb' = a' \cdot Tz + b' \cdot Rx + c' \cdot Ry \qquad (2)$$

$$Sc' = a'' \cdot Tz + b'' \cdot Rx + c'' \cdot Ry \qquad (3)$$

Hierbei sind:

Tz, Rx, Ry die Signale, welcher der Spacemaster zur Verfügung stellt;

Sa', Sb', Sc' die Positioniersignale für die Angriffspunkte A, B, C auf den Bezugsachsen a, b, c; und

a, a', a''
b, b', b''
c, c', c'' konstante Umrechnungsfaktoren

Es besteht außerdem die Möglichkeit, diese beiden Verfahren zu mischen und zum Beispiel einen Freiheitsgrad aus einem Fahrhebel abzuleiten und zwei Freiheitsgrade aus einem speziellen Fahrhebel.

Die so erhaltenen Positioniersignale Sa, Sb, Sc können bei Bedarf auf einen Datenträger geschrieben werden, um zu einem späteren Zeitpunkt wieder abgerufen zu werden, entweden direkt oder mit einer speziellen Behandlung versehen. Es ist auch vorstellbar, daß die über die Wichtung gewonnenen Steuersignale für die einzelnen Antriebe oder Maschinen auf einen Datenträger geschrieben werden.

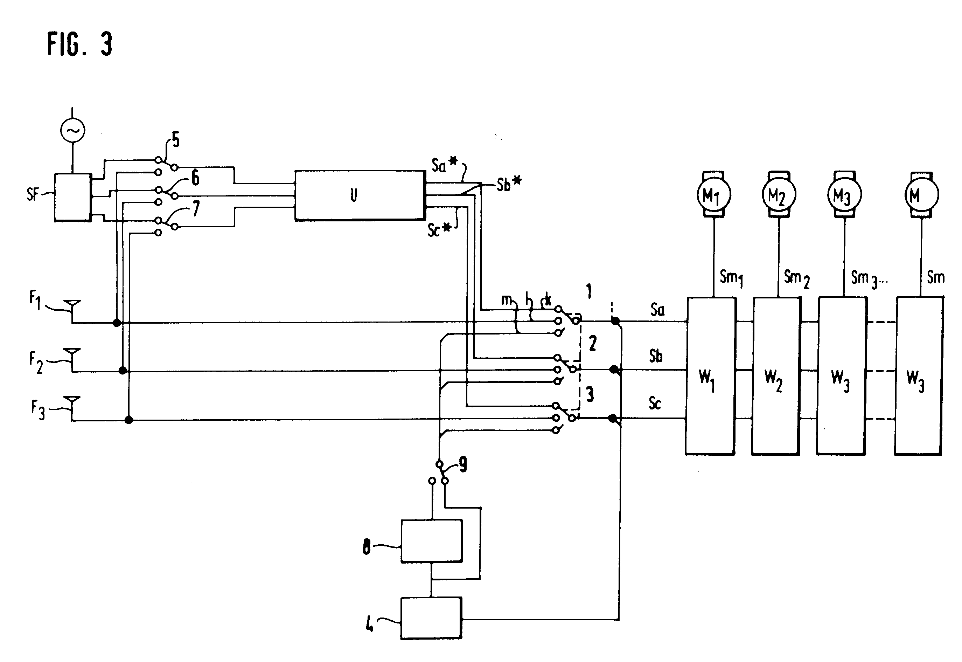

Bei dem in der Figur 3 schematisch dargestellten Ausführungsbeispiel einer Vorrichtung zur Durchführung des Verfahrens nach der Erfindung sind mit M1, M2, M3, ....Mx die Maschinen oder Antriebsmotoren bezeichnet, welche im Bühnenraum über, bzw unter der Bühne montiert sind, um die Seilabgänge, an den das zu bewegende komplexe Gebilde aufgehängt ist, bzw die Hubpodien, auf den das zu bewegende Gebilde ruht, anzutreiben.

Jedem Motor M1... x wird das zugeordnete Gesamtpositioniersignal Sm1...x zugebührt. Dies wird aus den Positioniersignalen Sa, Sb, Sc in den mit W1, W2, W3, .... Wx bezeichneten Schaltkreisen nach der Gleichung (0) gewonnen. Jedem Schaltkreis W1...x werden die gleichen Positioniersignal Sa, Sb, Sc zugeführt. Die Schaltkreise W1...x sind als einzelne Schaltblöcke dargestellt, können jedoch Teil eines Rechners sein, und sind dies auch in der bevorzugten Ansführungsform der Vorrichtung zur Durchführung des Verfahrens nach der Erfindung.

Die auf den Zuleitungen zu den Schaltkreisen zugeführten Signale Sa, Sb, Sc können auf verschiedene Weise gewonnen werden. Dies ist durch die mehrstufigen Schalter 1, 2, 3 in diesen Zuleitungen angedeutet.

In der gezeichneten Stellung k verbinden die Schalter 1, 2, 3 die Schaltkreise W1...x mit den Ausgängen Sa*, Sb*, Sc* eines Schaltkreis U, dessen Eingänge über Umschalter 5, 6, 7 entweder mit den drei Fahrschaltern F1, F2, F3 oder mit dem speziellen Fahrschalter SF verbunden werden können. Aus den Ausgangsignalen des speziellen Fahrschalters SF oder den Ausgangssignalen der Fahrschalter F1... 3, oder aus Kombination davon leitet der Schaltkreis U die Positioniersignale Sa*, Sb*, Sc* nach den Gleichungen (1), (2), (3) ab. Werden die Positioniersignale Sa*, Sb*, Sc* nicht mehr geändert so entsprechen Sie den den Schaltkreisen W1... x zugeführten Signale Sa, Sb, Sc. Der Schaltkreis U kann Teil des die Schaltkreise W1...x enthaltenden Rechners sein.

Die Fahrhebel F1...3 können auch direkt über die Schalter 1, 2, 3 in Stellung m mit den Schaltkreisen W1...x verbunden werden, um die Antriebsmotoren M1...x zu steuern.

Es ist möglich die Postioniersignale Sa, Sb, Sc auf einem Datenträger 4 beliebiger Art zu speichern. Die auf dem Datenträger 4 gespeicherten Positioniersignale können dann später den Schaltkreisen W1... x direkt, bzw nach Weiterverarbeitung im Schaltkreis 8, (angedeutet durch Umschalter 9) zur Steuerung den Antriebsmotoren M1...x zugeführt werden.

Eine weitere Möglichkeit der Speicherung der Gesamtsteuersignale Sm1...x auf einem Datenträger und deren späteren Verwendung zur direkten Steuerung der Antriebsmotoren M1...x sei hier erwähnt, ist jedoch nicht in den Zeichnungen dargestellt.

Auch ist es möglich die Positioniersignale Sa, Sb, Sc einer extern angeschlossenen Apparatur zu entnehmen.

**Patentansprüche**

1. Verfahren zum Bewegen, mit mindestens drei Freiheitsgraden, insbesondere im Theaterbereich auf oder unter einer Bühne, eines komplexen dreidimensionalen Gebildes (F), welches durch mehrere unabhängig anzusteuernde Hubmaschinen (M) oder der gleichen getragen wird, dadurch gekennzeichnet, daß man in dem Raum drei virtuelle parallele Bezugachsen (A, B, C) installiert, auf welchen in Abhängigkeit von je einem Positioniersignal (Sa, Sb, Sc) je ein Angriffspunkt (a, b, c) auf- bzw. abbewegt wird, daß man durch diese Angriffspunkte eine virtuelle Fläche (F) zieht, daß man über bzw. unter dieser Fläche (F) mehrere unabhängige Hubmaschinen (M) oder der gleichen installiert, daß man in Abhängigkeit von ihrer Position gegenüber jeder Bezugsachse für Jede Hubmaschine (M) eine Wichtung ($W_1$, $W_2$, $W_3$..) bestimmt, welche ein Maß ist für den Betrag, mit welchem der Lauf der jeweiligen Maschine ($M_1$, $M_2$, $M_3$...) von der Bewegung der Angriffspunkte (a, b, c) auf den Bezugsachsen (A, B, C) beeinflußt wird, daß man die Bewegungsrichtung und -Geschwindigkeit der Angriffspunkte (a, b, c) auf den Bezugsachsen (A, B, C) als Positioniersignale (Sa, Sb, Sc) vorgibt, daß man über die Wichtung ($W_1$, $W_2$, $W_3$..) für jede Maschine (M) Teilsteuersignale (Wa.Sa, Wb.Sb, Wc.Sc) entsprechend der Anteile ihrer Beeinflußung durch die Bewegung der Angriffspunkte (a, b, c) erzeugt, daß man die Teilsteuersignale für jede Maschine (M) summiert und der einzelnen zugeordneten Maschinen als Gesamtsteursignal (Sm) zuführt.

2. Verfahren nach Anspruch 1, dadurch gekennzeichnet, daß man die Positioniersignale (Sa, Sb, Sc) der Bewegungsrichtung und -Geschwindigkeit der Angriffspunkte (a, b, c) auf den Bezugachsen (A, B, C) mittels mehrerer unabhängiger Fahrhebel ($F_1$, $F_2$, $F_3$) deren Auslenkung ein Maß für die Geschwindigkeit und eine Angabe der Richtung darstellt, vorgibt.

3. Verfahren nach Anspruch 1, dadurch gekennzeichnet, daß man die Positioniersignale (Sa, Sb, Sc) der Bewegungsrichtung und -Geschwindigkeit der Angriffspunkte auf den Bezugsachsen mittels eines Fahrhebels ($S_F$), welcher mindestens drei verschiedene, unabhängige Bewegungen im Raum, wie zum Beispiel x-Rotation, y-Rotation und z-Translation, ausführen kann, vorgibt.

4. Verfahren nach Anspruch 1, dadurch gekennzeichnet, daß man die Positioniersignale (Sa, Sb, Sc) der Bewegungsrichtung und -Geschwindigkeit der Angriffspunkte (a, b, c) auf den Bezugachsen (A, B, C) zum Teil mittels eines oder mehrerer Fahrhebel ($F_1$, $F_2$, $F_3$) mit einem Freiheitsgrad und zum Teil mittels eines Fahrhebels ($S_F$), welcher mindestens drei verschiedene, unabhängige Bewegungen im Raum , wie zum Beispiel x-Rotation, y-Rotation und z-Translation ausführen kann, vorgibt.

5. Verfahren nach Anspruch 1, dadurch gekennzeichnet, daß man die Positioniersignale (Sa, Sb, Sc) für die Angriffspunkte (a, b, c) auf den Bezugsachsen (A, B, C) von einem Datenträger (4) oder von einer extern angeschlossenen Apparatur (8) zuführt.

6. Verfahren nach einem der Ansprüche 1 bis 5, dadurch gekennzeichnet, daß die Positioniersignale (Sa, Sb, Sc) für die Angriffspunkte (a, b, c) auf den Bezugsachsen (A, B, C) auf einem Datenträger (4) gespeichert werden, um auf diese Art eine mehr oder weniger komplexe Bewegung zu erlernen, um sie zu einem späteren Zeitpunkt entweder wieder abzufahren oder sie sonstwie weiterzuverarbeiten.

7. Verfahren nach einem der Ansprüche 1 bis 5, dadurch gekennzeichnet, da die aus der Summierung der Teilsteuersignal (Wa.Sa, Wb.Sb, Wc.Sc) gewonnenen Gesamtsteuersignale (Sm) für die Maschinen auf einem Datenträger (4) gespeichert werden, um auf diese Art eine mehr oder weniger komplexe Bewegung zu erlernen, um sie zu einem späteren Zeitpunkt entweder wieder abzufahren oder sie sonstwie weiterzuverarbeiten.

**Claims**

1. Method for moving, with at least three degrees of freedom, particularly in the theatre field on or below a stage, a complex three-dimensional structure (F), which is borne by several lifting machines (M) or the like to be driven independently, characterized in that three virtual parallel references axes (A, B, C) are installation in the space, on which, as a function of one positioning signal in each case (Sa, Sb, Sc) per point of application (a, b, c), up or down movements are made, in that a virtual surface (F) is drawn by these points of application, in that several independent lifting machines (M) or the like are installed above or below this surface (F), in that as a function of their position with respect to each reference axis a weighting ($W_1$, $W_2$, $W_3$ ...) is determined for each lifting machine (M), which is a measure of the amount by which the running of the relevant machine ($M_1$, $M_2$, $M_3$...) is influenced by the movement of the points of application (a, b, c) on the reference axes (A, B, C), in that the direction of movement and speed of movement of the points of application (a, b, c) of the reference axes (A, B, C) are predefined as positioning signals (Sa, Sb, Sc), in that partial control signals (Wa.Sa, Wb.Sb, Wc.Sc) are created according to the proportions of the influence on them by the movement of the points of application (a, b, c) via the weighting ($W_1$, $W_2$, $W_3$ ...) for each machine (M), in that the partial control signals are summated and fed to the individual assigned machines as an overall control signal (Sm).

2. Method according to Claim 1, characterized in that the positioning signals (Sa, Sb, Sc) of the direction and speed of movement of the points of application (a, b, c) on the reference axes (A, B, C) are predefined by means of several independent motion levers ($F_1$, $F_2$, $F_3$) whose deflection represents a measure of the speed and an indication of the direction.

3. Method according to Claim 1, characterized in that the positioning signals (Sa, Sb, Sc) of the direction and speed of movement of the points of application on the reference axes are predefined by means of a motion lever ($S_F$), which can execute at least three different independent movements in space such as x rotation, y rotation and z translation.

4. Method according to Claim 1, characterized in that the positioning signals (Sa, Sb, Sc) of the direction and speed of movement of the points of application (a, b, c) of the reference axes (A, B, C) are predefined partly by means of one or more motion levers ($F_1$, $F_2$, $F_3$) with one degree of freedom and partly by means of a motion lever ($S_F$) which can execute at least three different independent movements in space such as x rotation, y rotation and z translation.

5. Method according to Claim 1, characterized in that the positioning signals (Sa, Sb, Sc) for the points of application (a, b, c) on the reference axes (A, B, C) are supplied by a data medium (4) or by an eternally connection device (8).

6. Method according to one of Claims 1 to 5, characterized in that the positioning signals (Sa, Sb, Sc) for the points of application (a, b, c) on the reference axes (A, B, C) are stored on a data medium (4) to learn a more or less complex movement in this way, either to retrieve it at a later point in time or to process it further in another way.

7. Method according to one of Claims 1 to 5, characterized in that the overall control signals (Sm) obtained from the summation of the partial control signals (Wa.Sa, Wb.Sb, Wc.Sc) for the machines are stored on a data medium (4) in order to learn a more or less complex movement in this way, either to retrieve it at a later point in time or to process it further in another way.

## Revendications

1. Procédé pour déplacer, suivant au moins trois degrés de liberté, en particulier dans le domaine théâtral sur ou sous une scène, un ensemble complexe à trois dimensions de décors (F), porté par plusieurs machines de levage (M) ou similaires, commandées séparément,

     caractérisé en ce que l'on installe dans l'espace trois axes virtuels de référence (A, B, C) parallèles, sur chacun desquels on fait déplacer vers le haut ou vers le bas, en fonction chaque fois d'un signal de positionnement (Sa, Sb, Sc), un point d'application (a, b, c), en ce qu'on fait passer, par ces points d'application, une surface virtuelle (F), en ce qu'on installe, au-dessus ou au dessous de cette surface (F), plusieurs machines de levage (M) indépendantes ou similaires, en ce qu'on fixe, en fonction de leur position par rapport à chaque axe de référence, pour chaque machine de levage (M), une grandeur de répartition de poids (W1, W2, W3), qui est une mesure pour la quantité avec laquelle la course de chaque de chaque machine concernée (M1, M2, M3) est influencée par le mouvement des points d'application (a, b, c) sur les axes de référence (A, B, C), en ce que l'on définit à l'avance la direction et la vitesse du mouvement des points d'application (a, b, c) sur les axes de référence (A, B, C) comme signaux de positionnement (Sa, Sb, Sc), en ce qu'on émet, par la répartition de poids (W1, W2, W3) pour chaque machine (M), des signaux de commande partiels (Wa.Sa, Wb.Sb, Wc.Sc) correspondant à leur part d'influence causée par le mouvement des points d'application (a, b, c), en ce qu'on fait, pour chaque machine (M), la somme des signaux de commande partiels et qu'on les envoie sous la forme d'un signal de commande résultant (Sm) aux différentes machines correspondantes.

2. Procédé suivant la revendication 1, caractérisé en ce que l'on définit à l'avance les signaux de positionnement (Sa, Sb, Sc) correspondant à la direction et à la vitesse du mouvement des points d'application (a, b, c) sur les axes de référence (A, B, C), au moyen de plusieurs leviers de direction (F1, F2, F3) indépendants, dont le pivotement constitue une mesure pour la vitesse et une donnée correspondant à la direction.

3. Procédé suivant la revendication 1, caractérisé en ce que l'on définit à l'avance les signaux de positionnement (Sa, Sb, Sc) correspondant à la direction et à la vitesse du mouvement des points d'application (a, b, c) sur les axes de référence (A, B, C) au moyen d'un levier de direction ($S_F$), qui peut exécuter dans l'espace au moins trois mouvements différents indépendants, comme, par exemple, une rotation x, une rotation y et une translation z.

4. Procédé suivant la revendication 1, caractérisé en ce que l'on définit à l'avance les signaux de positionnement (Sa, Sb, Sc) correspondant à la direction et à la vitesse du mouvement des points d'application (a, b, c) sur les axes de référence (A, B, C), en partie au moyen d'un ou de plusieurs leviers de direction (F1, F2, F3) comportant un degré de liberté, et, en partie, au moyen d'un levier de direction ($S_F$), qui peut exécuter dans l'espace au moins trois mouvements différents indépendants, comme, par exemple, une rotation x, une rotation y et une translation z.

5. Procédé suivant la revendication 1, caractérisé en ce que l'on envoie les signaux de positionnement (Sa, Sb, Sc) pour les points d'application (a, b, c) sur les axes de référence (A, B, C), depuis un support de données (4) ou depuis un appareillage (8) raccordé extérieurement.

6. Procédé suivant l'une quelconque des revendications 1 à 5, caractérisé en ce que les signaux de positionnement (Sa, Sb, Sc) correspondant aux points d'application (a, b, c) sur les axes de référence (A, B, C) sont mis en mémoire sûr un support de données (4), pour, de cette manière, élaborer un mouvement plus ou moins complexe, soit pour le faire exécuter de nouveau, à un instant ultérieur, soit pour le retransformer d'une manière quelconque

7. Procédé suivant l'une quelconque des revendications 1 à 5, caractérisé en ce que les signaux de commande résultants (Sm), obtenus par sommation dés signaux de commande partiels (Wa.Sa, Wb.Sb, Wc.Sc) pour les machines, sont mis en mémoire sur un support de données (4), pour, de cette manière, élaborer un mouvement plus ou moins complexe, soit pour le faire exécuter, de nouveau, à un instant ultérieur, soit pour le retransformer d'une, manière quelconque.

# FIG. 1

# FIG. 2a

Wichtung   A = 100 %

Wichtung   B =    0 %

Wichtung   C =    0 %

# FIG. 2b

Wichtung   A =  50 %

Wichtung   B =  50 %

Wichtung   C =   0 %

# FIG. 2c

Wichtung   A = ~ 33 %

Wichtung   B = ~ 33 %

Wichtung   C = ~ 33 %

FIG. 3

EP 0 538 180 B1